# EUROPÄISCHE PATENTANMELDUNG

(11) **EP 1 905 794 A1**
(43) Veröffentlichungstag der Anmeldung: **02.04.2008**
(21) Anmeldenummer: 06020359.3
(22) Anmeldetag: 28.09.2006
(51) Int. Cl.: C08G 77/04, C08G 77/38, C08G 77/388, C08G 77/44

(54) **Dimere und oligomere Siloxane und deren Umsetzungsprodukte mit Organosiloxanen**

(71) Anmelder: Huntsman Textile Effects (Germany) GmbH, 86462 Langweid (DE)
(72) Erfinder: Chrobaczek, Harald, Dr., 86153 Augsburg (DE); Chowdhury, Kenneth, 86163 Augsburg (DE); Niederstadt, Rule, 86157 Augsburg (DE); Eisele, Andreas, 86152 Augsburg (DE); Süss, Sabrina, 86647 Lauterbach (DE)

(57) **Zusammenfassung**

Die dimeren oder oligomeren Silane oder Gemische davon lassen sich herstellen durch Umsetzung von Silanen, welche 2 oder 3 OR-Gruppen enthalten, mit Wasser. Die weitere Umsetzung dieser dimeren und/oder oligomeren Silane mit Organosiloxanen führt zu Polysiloxanen mit funktionellen Gruppen. Die entstehenden Polysiloxane eignen sich unter anderem zur Beschichtung von textilen Flächengebilden.

## Beschreibung

Die Erfindung betrifft dimere oder oligomere Silane oder Gemische davon und die Umsetzungsprodukte dieser Silane mit Organosiloxanen. Sie betrifft ferner die Verwendung der bei dieser Umsetzung erhaltenen Polyorganosiloxane zur Beschichtung textiler Flächengebilde.

Polysiloxane, welche Acrylatogruppen enthalten, sind bekannt, z.B. aus der DE-A 102 19 734, EP-A 564 253, US-A 4 528 081 und der EP-A 373 659 und der US 6 211 322 B1. Aus der oben genannten Literatur geht außerdem hervor, dass es bekannt ist, Silicumverbindungen, welche Acrylateinheiten enthalten, durch radikalische Polymerisation zu härten. Diese radikalische Polymerisation kann z.B. durch UV-Bestrahlung erfolgen.
Gemäß dem Stand der Technik lassen sich Polyorganosiloxane mit funktionellen Gruppen, z.B. Acrylatgruppen, in Seitenketten herstellen durch Kondensations- oder Äquilibrierungsreaktionen. Hierbei werden Polyorganosiloxane mit monomeren, reaktive Gruppen tragenden, Silanen umgesetzt, wobei im Fall von Kondensationsreaktionen als Ausgangsverbindungen Polysiloxane mit endständigen OH-Gruppen verwendet werden.
Die aus dem Stand der Technik bekannten Polyorganosiloxane mit reaktiven Gruppen in Seitenketten enthalten die Seitenketten in statistischer Verteilung. Die Reaktivität solcher Polysiloxane, z.B. bezüglich ihrer schnellen Härtbarkeit, ist nicht in allen Fällen befriedigend.

Der vorliegenden Erfindung lag die Aufgabe zugrunde, Silane zur Verfügung zu stellen, aus welchen sich nach Umsetzung mit Polyorganosiloxanen Polymere erhalten lassen, die eine erhöhte Reaktivität, z.B. in Härtungsprozessen besitzen.
Die Aufgabe wurde gelöst durch dimere und/oder oligomere Silane, herstellbar durch Umsetzung eines Silans der Formel (I) 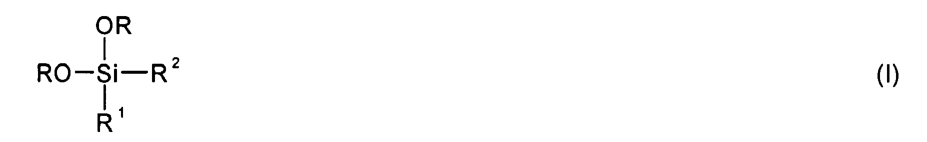 oder einem Gemisch solcher Silane mit Wasser, wobei pro Mol Silan oder Silangemisch 0,5 bis 1,5 Mol Wasser verwendet werden, zu einem dimeren und/oder oligomeren Produkt, welches 2 bis 200, insbesondere 2 bis 50, besonders bevorzugt 2 bis 15 Siliciumatome im Molekül enthält, oder zu einem Gemisch solcher dimerer oder oligomerer Produkte,
wobei
alle anwesenden Reste R unabhängig voneinander für den Phenylrest oder für einen Alkylrest mit 1 bis 18 Kohlenstoffatomen, vorzugsweise für CH₃ oder C₂H₅ stehen,
R¹ für R oder OR steht,
R² für den Vinylrest oder für einen linearen oder verzweigten Alkylrest mit 1 bis 18 Kohlenstoffatomen steht, der durch eine oder mehrere, gegebenenfalls quaternierte, Aminogruppen, Amidogruppen, Mercaptogruppen, Epoxygruppen, Phosphonogruppen, Hydroxygruppen oder Fluoratome substituiert sein kann,
oder wobei
R² für einen Rest der Formel (II), der Formel (III) oder der Formel (IV) steht, 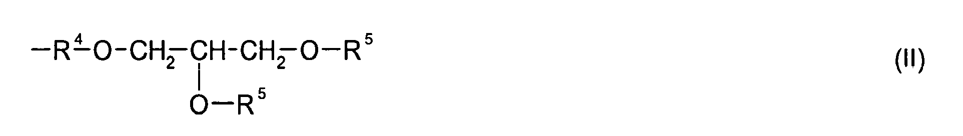 worin beide Reste R⁵ für 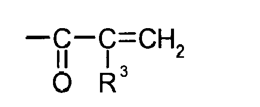 stehen, oder einer der Reste R⁵ für H und der andere für 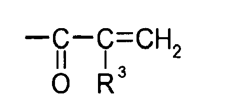 steht, 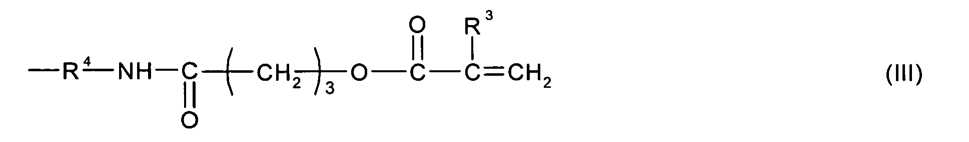 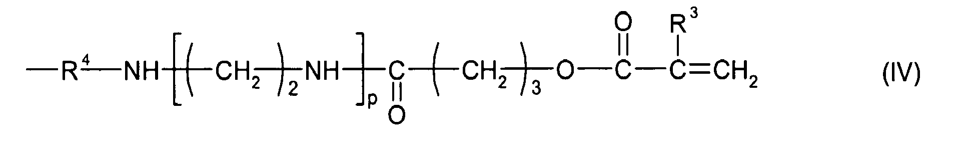 wobei p 0, 1 oder 2 ist,
wobei R³ jeweils für H oder CH₃ steht,
oder wobei R² für einen Rest der Formel (V) steht 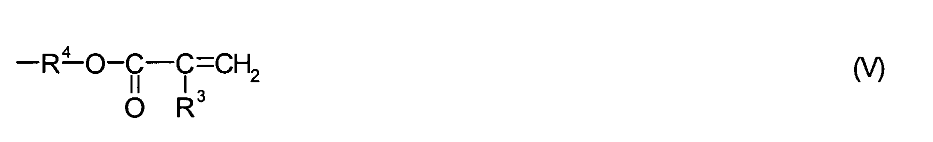 worin R⁴ für einen zweiwertigen linearen oder verzweigten Kohlenwasserstoffrest mit 1 bis 4 Kohlenstoffatomen steht,
oder wobei R² für einen Rest der Formel (VI) oder der Formel (VII) oder der Formel (X) steht 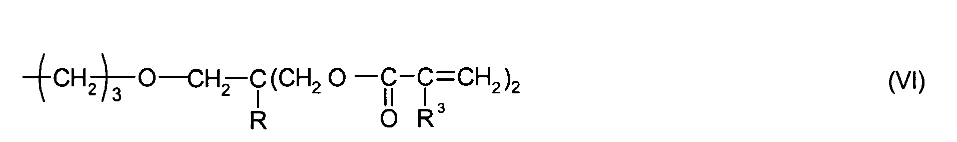 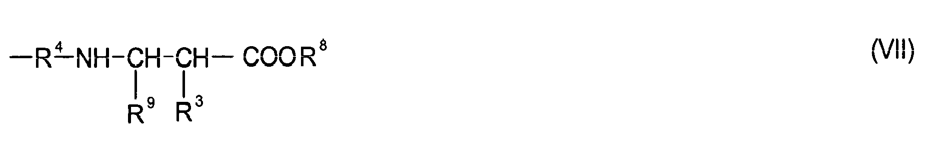 worin R⁸ für H oder für CH₃ oder für C₂H₅ oder -CH₂CH₂-OH steht und R⁹ für H oder für -COOR⁸ steht,

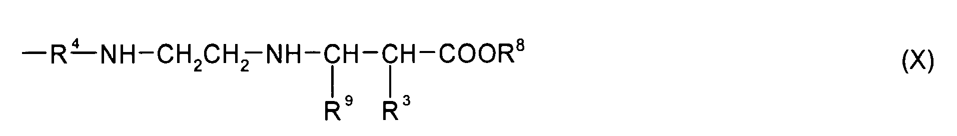

Die erfindungsgemäßen dimeren/oligomeren Silane eignen sich zur Behandlung von textilen Flächengebilden wie z.B. Geweben.

Die Umsetzung der erfindungsgemäßen dimeren bzw. oligomeren Silane oder Gemischen dieser Silane mit Organosiloxanen führt zu neuen Polyorganosiloxanen, in denen die aus den Silanen stammenden reaktiven Gruppen in Seitenketten in Blockform vorliegen, während Produkte aus dem Stand der Technik die reaktiven Seitenketten in statistischer Verteilung aufweisen. Es wurde überraschenderweise gefunden, dass diese neuen Polyorganosiloxane ausgezeichnete Reaktivität, insbesondere bei Härtungsprozessen, aufweisen. Vorteile resultieren insbesondere auch dann, wenn die in den Silanen anwesenden funktionellen Gruppen (R²) Acrylatreste enthalten. Diese sind dann auch in den nach Umsetzung mit Organosiloxanen enthaltenen Produkten enthalten und lassen sich härten bzw. polymerisieren, z.B. durch UV-Strahlung. Dies macht die neuen Polysiloxane gut geeignet für Beschichtungsprozesse, z.B. Beschichtung von textilen Flächengebilden. Auch Glasfasergewebe können mit diesen neuen Polysiloxanen behandelt werden. Daneben lassen sich Glasfasergewebe auch mit erfindungsgemäßen dimeren/oligomeren Silanen behandeln und anschließend härten bzw. unter Alkoholabspaltung kondensieren. Das Aufbringen der erfindungsgemäßen dimeren/oligomeren Silane oder der erfindungsgemäßen neuen Polysiloxane auf die textilen Flächengebilde oder auf die Glasfasergewebe kann nach bekannten Methoden erfolgen, z.B. durch Beschichtung oder Foulardierung (Badimprägnierung).

Als Ausgangssubstanzen zur Herstellung erfindungsgemäßer Silane werden Silane der Formel (I) 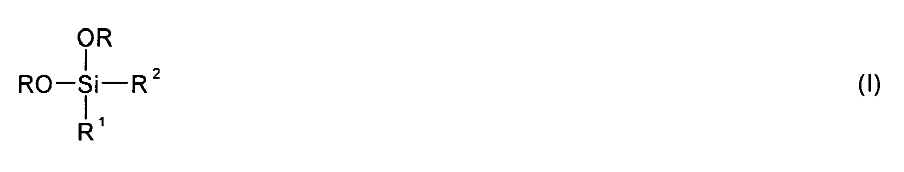 verwendet. Es kann eine einzige Verbindung der Formel (I) eingesetzt werden oder ein Gemisch solcher Silane. Das Silan oder Silangemisch wird mit Wasser in solchen Mengenverhältnissen umgesetzt, dass pro Mol Silan 0,5 bis 1,5 Mol Wasser verwendet werden. Verwendet man ein Gemisch von Silanen der Formel (I), so sind natürlich die Molzahlen der einzelnen im Gemisch anwesenden Silane zu addieren, um die erforderliche Menge Wasser zu berechnen.
Die beschriebene Umsetzung der Silane der Formel (I) mit Wasser führt zu einem dimeren oder oligomeren Produkt oder einem Gemisch solcher Produkte. Dieses enthält durchschnittlich 2 bis 200, insbesondere 2 bis 50 und besonders bevorzugt 2 bis 15 Siliciumatome im Molekül. Im Normalfall ist das entstehende Produkt ein Gemisch, das dimere und oligomere Silane enthält. Diese dimeren oder oligomeren Silane werden bei der Umsetzung der Silane der Formel (I) mit Wasser dadurch gebildet, dass 2 OR-Gruppen zweier unterschiedlicher Silan-Moleküle in Gegenwart von Wasser unter Abspaltung von ROH zu Verbindungen reagieren, welche Si-O-Si-Bindungen aufweisen. Die Anzahl von Siliciumatomen, welche das entstehende Gemisch durchschnittlich pro Molekül enthält, sowie das relative Mengenverhältnis von Dimeren zu Oligomeren lässt sich in dem Chemiker bekannter Weise durch die Reaktionsbedingungen steuern, so z.B. durch das Verhältnis der Menge der eingesetzten Silane zur Menge an Wasser.

Als Silane der Formel (I) werden vorzugsweise Verbindungen verwendet, die bei Raumtemperatur flüssig sind. Sollen Silane fester Konsistenz eingesetzt werden, empfiehlt sich die Verwendung eines Lösungsmittels, das unter den Bedingungen der Umsetzung der Silane mit Wasser nicht reagiert. Als Beispiel für Lösungsmittel seien niedrigmolekulare Dialkylketone genannt.

Die Silane der Formel (I) enthalten zwei oder drei an ein Si-Atom gebundene OR-Gruppen. Falls der Rest R¹ in Formel (I) für OR steht, liegen 3 OR-Gruppen vor. Aus Silanen mit 2 oder 3 OR-Gruppen können nach Dimerisierung/Oligomerisierung und anschließend weiterer Umsetzung mit α, ω-Dihydroxy-dialkyl-polysiloxanen, die unten beschrieben wird, Polysiloxane erhalten werden, welche 2 oder mehr benachbarte reaktive Gruppen in Blockform enthalten. Diese reaktiven Gruppen stammen aus den Resten R² der Silane der Formel (I).

In Formel (I) stehen alle anwesenden Reste R unabhängig voneinander für den unsubstituierten Phenylrest oder für einen Alkylrest mit 1 bis 18 Kohlenstoffatomen. Bevorzugt steht jeder Rest R für den Methyl- oder den Ethylrest.
Der Rest R¹ steht entweder für einen Rest R der genannten Bedeutung oder für einen Rest -OR.
Für den Rest R² in den Silanen der Formel (I) können folgende unterschiedliche Möglichkeiten in Frage kommen
a) Vinylrest
b) linearer oder verzweigter Alkylrest mit 1 bis 18 Kohlenstoffatomen, der durch eine oder mehrere Aminogruppen, Amidogruppen, Mercaptogruppen, Epoxygruppen oder Fluoratome substituiert sein kann. Im Falle einer Substitution durch Aminogruppen können diese in freier und/oder quaternierter Form vorliegen. Geeignete Beispiele für substituierte Alkylreste der genannten Art sind 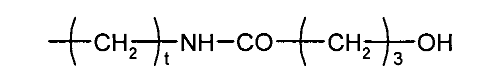 mit t=2-4

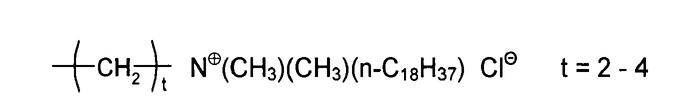

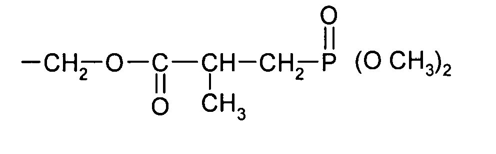

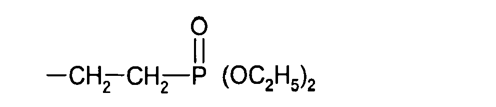

   -CH₂-CH(CH₃)-CH₂-C(CH₃)₂-CH₃

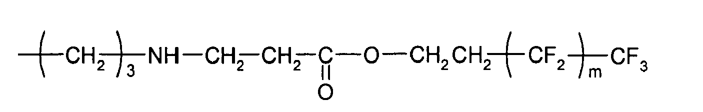

   mit m = 5 - 15

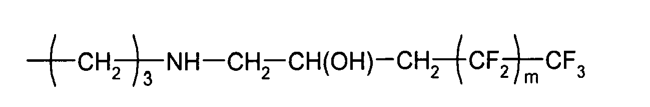

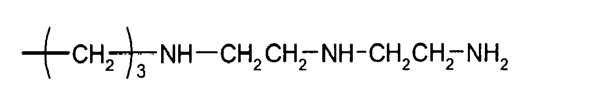

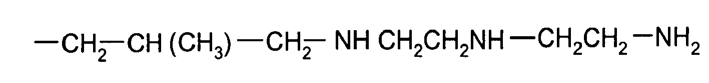

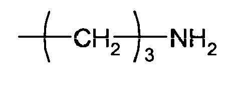

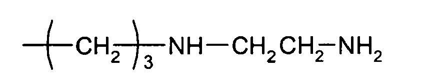

   -CH₂-CH(CH₃) -CH₂-NH-CH₂CH₂-NH₂

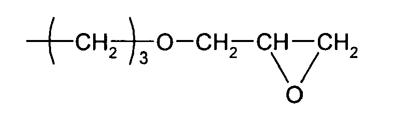

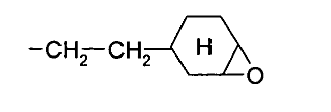

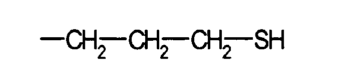

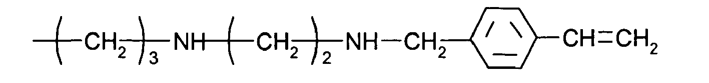

   bzw. dessen Addukt mit HCl
   (herstellbar aus Aminosilan und p-Chlormethylstyrol)
c) Rest einer der Formeln (II) bis (VII) oder der Formel (X) 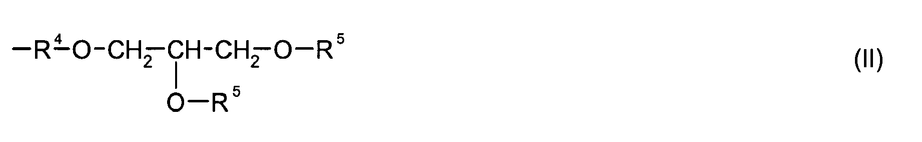 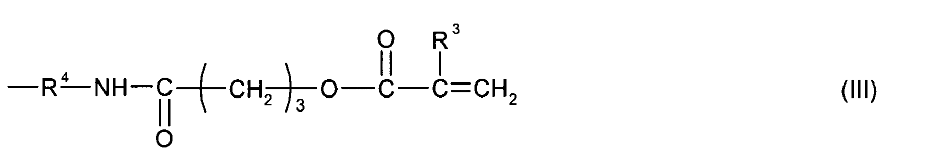 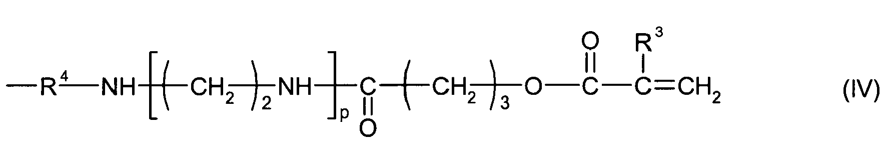 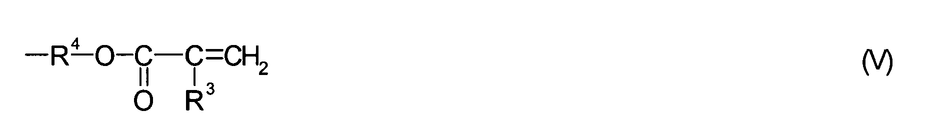 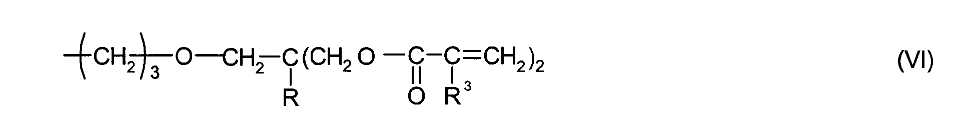 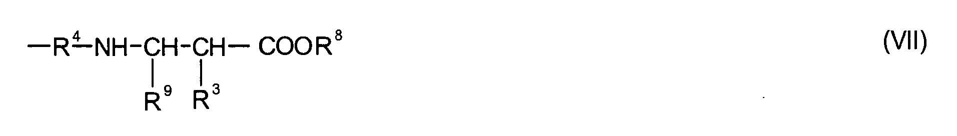 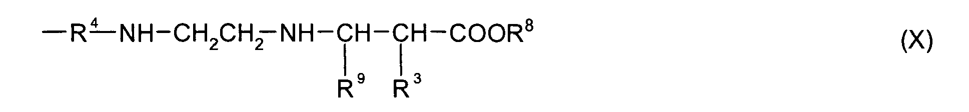 Hierin bedeuten:
   R³ Wasserstoff oder die Methylgruppe
   R⁴ einen zweiwertigen linearen oder verzweigten Kohlenwasserstoffrest mit 1 bis 4
   Kohlenstoffatomen
   R⁵ Wasserstoff oder 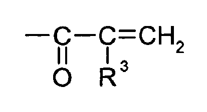 wobei mindestens einer der Reste R⁵ in Formel (II) für 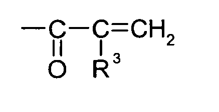 steht,
   R⁸ Wasserstoff oder -CH₃ oder -CH₂-CH₃ oder -CH₂CH₂-OH ist,
   R⁹ Wasserstoff oder -CO0R⁸ ist,
   p besitzt den Wert 0, 1 oder 2

Es ist besonders bevorzugt, wenn Silane oder Silangemische der Formel (I) verwendet werden, die mindestens ein Silan der Formel (I) enthalten, bei dem R² ein Rest der Formel (V) ist

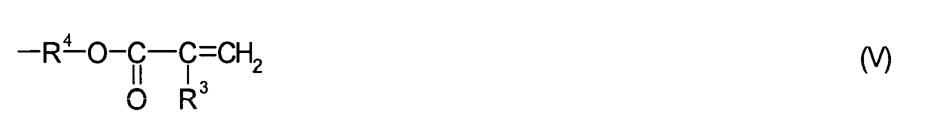

Sehr gut geeignet für die Dimerisierung/Oligomerisierung in Gegenwart von Wasser und für die unten beschriebene nachfolgende Umsetzung mit Organosiloxanen sind Silane der Formel (I), in denen alle Reste R unabhängig voneinander für CH₃ oder für -CH₂-CH₃ stehen und der Rest R² ein Rest der Formel (V) ist.
Außerdem wurde gefunden, dass es in vielen Fällen von Vorteil ist, wenn Silane eingesetzt werden, bei denen der Rest R³ eine Methylgruppe ist, also Methacrylverbindungen.

Die Silane der Formel (I) sind auf dem Markt erhältliche Produkte oder können nach Methoden hergestellt werden, die dem Chemiker bekannt sind. Mögliche Synthesen sind die Umsetzung eines Silans, das eine Si-H-Bindung und 2 oder 3 an Si gebundene Chloratome enthält, mit Allylverbindungen, z.B. mit Allylchlorid und anschließender weiterer Umsetzung mit Ammoniak oder einem Amin (wobei das endständige Chloratom der usprünglichen Allylgruppe durch den entsprechenden stickstoffhaltigen Rest substituiert wird) sowie nachfolgende Substitution der an Si gebundenen Chloratome durch OR mittels Umsetzung mit Alkohol. Ferner sind phosphorhaltige Silane der Formel (I) erhältlich durch Addition von

(CH₃O)₂P(O)-H

an Bisalkoxy- oder Trisalkoxysilane, welche Substituenten mit C=C-Doppelbindungen enthalten, z.B. an

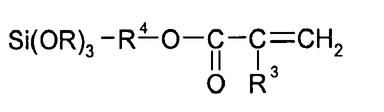

Die Herstellung gewisser fluorhaltiger Silane der Formel (I) kann durch Umsetzung von 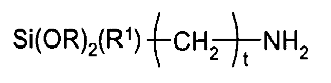 mit Fluoralkylresten enthaltenden Epoxiden erfolgen (siehe JP-2000-53950 A2 und JP-2000-53686 A2).
Silane der Formel (I), in denen der Rest R² ein Rest der Formel (V) ist, lassen sich herstellen durch Umsetzung von (RO)₂Si(R¹)-R⁴-CI mit

CH₂=C(R³) -COOH.

Ferner sind solche Silane von der Firma ABCR, DE beziehbar.
Silane der Formel (I), in denen der Rest R² ein Rest der Formel (Vl) ist, können erhalten werden durch Umsetzung von (Cl)₂Si(R)-H mit

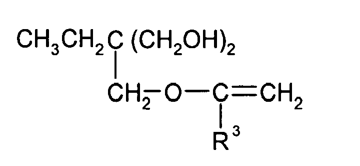

(Die letztgenannte Verbindung ist erhältlich durch Umsetzung einer der 3 OH-Gruppen von 1.1.1-Tris-methylol-propan mit (Meth)Allylchlorid),
wobei sich die Si-H-Bindung an die C=C-Doppelbindung addiert, anschließend Veresterung der beiden übrigen CH₂OH-Gruppen mit (Meth)Acrylsäure und Substitution der Chloratome durch OR-Gruppen mittels Umsetzung mit Alkohol ROH.
Silane der Formel (I), bei denen der Rest R² ein Rest der Formel (III) oder der Formel (IV) ist, können erhalten werden durch Addition eines Lactons, z.B. γ-Butyrolacton, an ein Aminoalkyl-dialkoxysilan und anschließender Umsetzung mit (Meth-)Acrylsäure oder Derivaten davon. Silane der Formel (I), bei denen der Rest R² ein Rest der Formel (VII) ist, können hergestellt werden, durch Addition von (Meth-)Acrylsäureester an Aminoalkyl-dialkoxysilan.

Als Silane der Formel (I) werden bevorzugt Silane verwendet, im welchen der Rest R² Acrylateinheiten oder Methacrylateinheiten enthält. Solche Silane sind auf dem Markt erhältlich, z.B. von der Firma ABCR GmbH & Co., Karlsruhe, DE. Ferner können solche Silane nach der Lehre der DE-A 102 19 734 hergestellt werden.

Bei der Umsetzung der Silane der Formel (I) mit Wasser wird gegebenenfalls ein Katalysator oder ein Gemisch von Katalysatoren mitverwendet. Als Katalysatoren sind geeignet basische oder saure Katalysatoren, wie z.B. Kaliumhydroxid oder Mineralsäuren.

Die Umsetzung der Silane der Formel (I) oder der Gemische solcher Silane mit Wasser kann im Normalfall bei Raumtemperatur durchgeführt werden. Es kann aber ggf. auch bei etwas erhöhter Temperatur gearbeitet werden. Die Reaktionszeit kann, je nach Art und Menge der Ausgangsverbindungen, wenige Minuten bis zu mehreren Tagen betragen. Für den Fall, dass flüssige Silane der Formel (I) eingesetzt werden, kann ohne Verwendung eines zusätzlichen Lösungsmittels gearbeitet werden.

Erfindungsgemäße dimere oder oligomere Silane oder Gemische davon sind besonders gut geeignet für die Herstellung neuartiger Polyorganosiloxane. Diese neuartigen Polyorganosiloxane sind besonders gut geeignet für die Beschichtung von textilen Flächengebilden und können hergestellt werden durch Umsetzung eines dimeren und/oder oligomeren Silans gemäß Anspruch 1 oder 2 mit einem Organosiloxan der Formel (VIII) 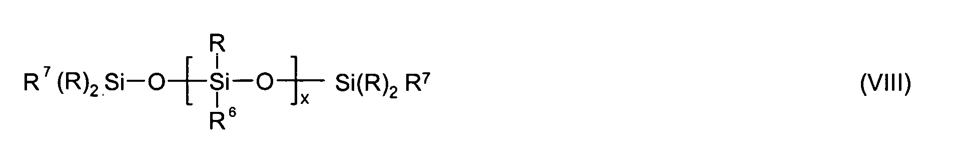 wobei R⁶ für R oder für einen Rest der Formel (IX) steht

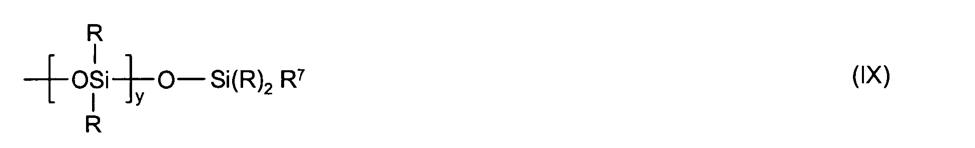

Die Verbindungen der Formel (VIII) werden im Folgenden der Einfachheit halber als "Polyorganosiloxane" bezeichnet, obwohl es sich für niedrige Werte von x um Oligoorganosiloxane handelt.
In Formel (VIII) ist
x eine Zahl von 0 bis 1500, vorzugsweise 10 bis 1500, und
y eine Zahl von 0 bis 500,
ferner stehen alle anwesenden Reste R⁷ für R oder OH, wobei das Organosiloxan der Formel (VIII) vorzugsweise mindestens einen Rest R⁷ enthält, der für eine Hydroxygruppe steht.
Für die Umsetzung der erfindungsgemäßen dimeren oder oligomeren Silane oder von Gemischen dieser Silane mit Polyorganosiloxanen der Formel (VIII) werden vorzugsweise das Polyorganosiloxan und das dimere oder oligomere Silan in solchen Mengenverhältnissen eingesetzt, dass pro Siliciumatom des Polyorganosiloxans 0,001 bis 5 Siliciumatome des dimeren oder oligomeren Silans zum Einsatz kommen.
Die für diese Umsetzung verwendeten Polyorganosiloxane der Formel (VIII) 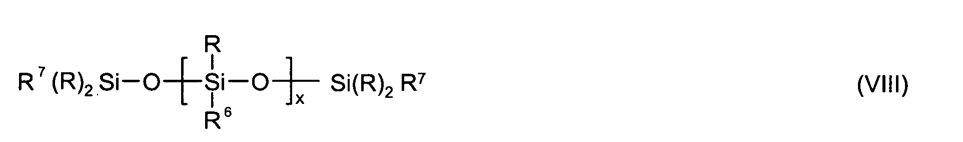 enthalten mindestens zwei Reste R⁷ an den Enden der Polysiloxankette. Jeder Rest R⁷ steht für einen Rest R der oben genannten Bedeutung oder für eine Hydroxygruppe. Vorzugsweise ist mindestens einer der anwesenden Reste R⁷ eine OH-Gruppe. Besonders gut geeignet sind Polysiloxane der Formel (VIII), in denen zwei der anwesenden Reste R⁷ für OH stehen.
In Formel (VIII) bedeutet x eine Zahl von 0 bis 1500, vorzugsweise von 10 bis 1500 und jeder der anwesenden Reste R⁶ steht für einen Rest R der genannten Bedeutung oder für einen Rest der Formel (IX).

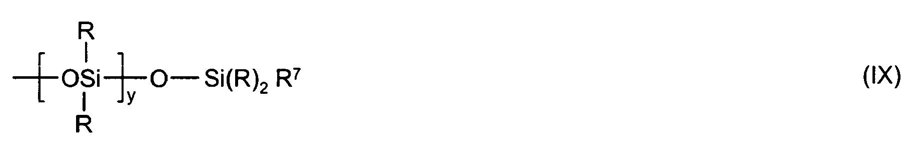

Hierin steht y für eine Zahl von 0 bis 500.
Die für die Umsetzung verwendeten Polyorganosiloxane können ferner, obwohl dies in Formel (VIII) nicht zum Ausdruck kommt, weitere funktionelle Gruppen in Seitenketten enthalten, z.B. Aminogruppen. In diesem Fall stehen einer oder mehrere der anwesenden Reste R⁶ für einen Rest mit einer solchen funktionellen Gruppe.
Außerdem können zusätzlich zu Polyorganosiloxanen der Formel (VIII) weitere Organosiloxane mitverwendet werden, z.B. niedrigmolekulare Oligodialkylsiloxane.

Es ist besonders vorteilhaft, wenn für die Umsetzung der erfindungsgemäßen dimeren bzw. oligomeren Silane mit Polyorganosiloxan der Formel (VIII) ein Polyorganosiloxan der Formel (VIII) verwendet wird, bei dem zwei der anwesenden Reste R⁷ jeweils für eine OH-Gruppe stehen und dass die Umsetzung bei einer Temperatur im Bereich von 80 bis 120°C durchgeführt wird.

Werden für die Umsetzung der erfindungsgemäßen dimeren bzw. oligomeren Silane mit Polyorganosiloxanen solche Polyorganosiloxane der Formel (VIII) verwendet, in denen keiner der Reste R⁷ für OH steht, so findet die Umsetzung unter den aus der Silikonchemie bekannten Bedingungen der Äquilibrierung statt, wobei ein Einbau der Silanstruktur in die Polysiloxankette erfolgt.
Ist dagegen einer oder mehrere der anwesenden Reste R⁷ eine OH-Gruppe, so können Kondensationsreaktionen zwischen diesen OH-Gruppen und OR-Gruppen des dimeren bzw. oligomeren Silans unter Abspaltung von Alkohol ROH stattfinden.
Die für die Äquilibrierungs- bzw. Kondensationsreaktionen erforderlichen Bedingungen sind aus der Fachliteratur über Silikone bekannt. Vorzugsweise erfolgen die Umsetzungen, welche zu den neuartigen Polyorganosiloxanen führen, unter Mitverwendung eines Katalysators oder Katalysatorgemischs und bei einer Temperatur im Bereich von 80 bis 130°C. Als Katalysatoren geeignet sind gegebenenfalls Lewis-Säuren oder verdünnte Mineralsäuren. Bevorzugt jedoch sind basische Katalysatoren wie Alkalimetallhydroxide oder -alkoholate.

Besonders gut geeignet sind, wie bereits erwähnt, Polyorganosiloxane der Formel (VIII), in denen zwei der anwesenden Reste R⁷ jeweils für eine OH-Gruppe stehen.

Die genannten Hydroxygruppen enthaltenden Polyorganosiloxane, die im Folgenden mit "α, ω-Dihydroxypolyorganosiloxane" bezeichnet werden, werden also mit erfindungsgemäßen dimeren bzw. oligomeren Silanen umgesetzt. Diese Umsetzung kann, wie unten näher erläutert, so durchgeführt werden, dass entweder eine Äquilibrierung stattfindet, bei der Struktureinheiten der Silane in die Kette des α, ω-Dihydroxypolyorganosiloxans eingebaut werden. Oder aber, und dies ist bevorzugt, die Umsetzung wird so durchgeführt, dass Kondensationsreaktionen zwischen endständigen OH-Gruppen des Polysiloxans und den Silanen stattfinden. Die zweite Variante, nämlich Kondensation, ist unter anderem deshalb bevorzugt, weil sie unter schonenderen Bedingungen, d.h. bei niedrigerer Temperatur durchgeführt werden kann als die Äquilibrierungsreaktion. Durch die genannten Umsetzungen entstehen Polyorganosiloxane, welche die aus den Silanen stammenden Einheiten R² enthalten.

Es sind prinzipiell 2 Arten von Umsetzungsmechanismen denkbar, nämlich eine Reaktionsführung, welche zu Äquilibrierungsreaktionen führt, oder eine Reaktionsführung, welche zu Kondensationsreaktionen führt. Bevorzugt ist es, die Umsetzung so durchzuführen, dass nur Kondensation stattfindet, aber keine Äquilibrierung. Die Kondensation läuft bei niedrigeren Temperaturen ab. Bei der Kondensation reagieren OR-Gruppen der dimeren bzw. oligomeren Silane mit endständigen OH-Gruppen des α, ω-Dihydroxypolysiloxans unter Abspaltung von Alkohol ROH und Kettenverlängerung.
Die Umsetzung lässt sich als Kondensation bei einer Temperatur im Bereich von 80 bis 105°C während 3 bis 4 Stunden durchführen, vorzugsweise unter vermindertem Druck, z.B. bei einem Druck im Bereich von 100 mbar. Einzelheiten über Kondenstionsreaktionen sind aus der Silikonchemie bekannt. Damit Kondensation überhaupt stattfinden kann, muß das verwendete Polysiloxan an mindestens zwei Kettenenden Hydroxygruppen aufweisen.

Äquilibrierungsreaktionen sind ebenfalls aus der Literatur über Silikonchemie gut bekannt. Bei der Äquilibrierung werden in die Polysiloxankette Silaneinheiten insertiert. Die Äquilibrierung erfordert also, dass Si-O-Si-Bindungen in der Kette gespalten werden. Hieraus erklärt sich, dass für Äquilibrierung höhere Temperaturen erforderlich sind als für Kondensation. Die Umsetzung bei welcher erfindungsgemäße Polysiloxane entstehen, führt man für den Fall, dass Äquilibrierung gewünscht wird, bei einer Temperatur im Bereich von 110 bis 135°C während einer Zeit von 3 bis 4 Stunden durch. Falls das Polyorganosiloxan der Formel (VIII) keine OH-Gruppen enthält, wird die Äquilibrierungsreaktion vorzugsweise in Anwesenheit von Wasser durchgeführt, um OR-Gruppen zu OH-Gruppen zu hydrolysieren.

Die Umsetzung, welche zu erfindungsgemäßen neuartigen Polyorganosiloxanen führt, wird vorzugsweise unter Mitverwendung eines Katalysators oder eines Gemischs von Katalysatoren durchgeführt, und zwar sowohl bei der Umsetzung in Form einer Kondensation als auch in Form einer Äquilibrierung.
Geeignete Katalysatoren sind aus der Silikonliteratur bekannt. In manchen Fällen können saure Katalysatoren angewendet werden, z.B. Lewis-Säuren oder verdünnte Mineralsäuren; im Normalfall sind jedoch basische Katalysatoren besser geeignet und daher bevorzugt. Gut geeignete basische Katalysatoren sind Alkalimetallhydroxide wie NaOH, KOH oder LiOH und insbesondere Metallalkoholate. Unter den Metallalkoholaten sind Alkalimetallalkoholate der Formel M(OR) besonders gut geeignet. Diese Metallalkoholate können z.B. als 20 bis 30 %ige Lösung in dem zugrundeliegenden Alkohol eingesetzt werden. Hierbei steht M für Na oder K und R für einen Alkylrest mit 1 bis 4 Kohlenstoffatomen.
Weitere geeignete Katalysatoren sind 4-Dimethylamino-pyridin und bicyclische Verbindungen, welche ein oder mehrere Stickstoffatome als Ringglieder enthalten. Beispiele sind 1.5-Diazabicyclo [2.2.2.]-octan, 1.5-Diazabicyclo [4.3.0]-non-5-en und 1.8-Diazabicyclo [5.4.0] undec-7-en.

Die erfindungsgemäßen neuartigen Polyorganosiloxane, welche durch Umsetzung der erfindungsgemäßen dimeren bzw. oligomeren Silane mit Polyorganosiloxanen der Formel (VIII) hergestellt werden können, lassen sich unter anderem gut für die Behandlung textiler Flächengebilde aus Fasermaterialien verwenden. Als Fasermaterialien kommen hierbei Gewebe, Gewirke oder nonwovens (Vliese) aus natürlichen oder synthetischen Fasern in Frage, wie z.B. aus Baumwolle, Polyester oder Polyamid oder Gemischen solcher Fasern. Die Applikation kann z.B. mittels Foulard-Verfahren oder Besprühen erfolgen. Vorzugsweise erfolgt die Applikation in Form einer Beschichtung. Die erfindungsgemäßen neuartigen Polyorganosiloxane eignen sich auch gut für die dem Fachmann bekannten Methoden der Vorhangbeschichtung (curtain-coating). Für den Fall, dass der in den Silanen der Formel (I) enthaltene Rest R² (Meth-)Acrylateinheiten aufweist, kann sich an die Vorhangbeschichtung ein Härtungs-(curing-)Vorgang anschließen, bei dem die Acrylateinheiten polymerisiert werden. Dies kann in bekannter Weise mittels Elektronenstrahlen oder durch UV-Strahlung bewirkt werden. Hierfür können bekannte Photoinitiatoren wie Produkte der Serie IRGACURE^{®} (Ciba Spezialitätenchemie, Basel, CH) verwendet werden oder Produkte, wie sie in der US-B1 6 211 308 (Spalte 10) genannt sind.

Die Erfindung wird nunmehr durch Ausführungsbeispiele veranschaulicht.

### Beispiel 1 (erfindungsgemäß)

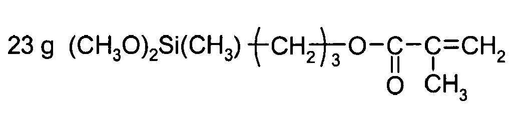

und
1 g Wasser
wurden bei Raumtemperatur miteinander verrührt, bis eine klare Lösung entstanden war (ca. 2 Stunden). Anschließend gab man 79 g α, ω-Dihydroxy-dimethyl-polysiloxan (ca. 40 mPa.s bei 20°C) und 0,3 g Hexamethyl-disiloxan und 0.1 g konz. H₂SO₄ (als Katalysator) hinzu. Die Mischung wurde auf 90°C erhitzt, daran anschließend der Druck auf 0,5 bar reduziert und das Ganze noch 1 Stunde bei 90°C gehalten. Dann wurden 0,2 g Hexamethyl-disiloxan zugegeben, der Druck auf Normaldruck erhöht und 30 min. gerührt.
Es entstand ein klares Silikonöl (Polyorganosiloxan) mit einer Viskosität von 400 bis 600 mPa.s bei 20°C.

### Beispiel 2 (erfindungsgemäß)

Zu
91 g (C₂H₅O)₂Si(CH₃)-CH₂CH₂CH₂-NH₂
wurden
8,5 g Wasser
innerhalb von 30 min. zugetropft. Anschließend wurde auf 45°C erhitzt und bei dieser Temperatur 2 Stunden gerührt.
23 g des entstandenen oligomeren Silans wurden mit 77 g α, ω-Dihydroxy-dimethyl-polysiloxan (Viskosität ca. 100 mPa.s bei 20°C) und mit 0,4 g einer NaOCH₃-Lösung (1 % in Methanol) vermischt. Die erhaltene Mischung wurde auf 90°C erhitzt und 15 Minuten bei 90°C gerührt.

Anschließend wurde der Druck auf 0,2 bar reduziert und 5,5 Stunden bei 90°C und diesem Druck gehalten. Man erhöhte den Druck auf Normaldruck. Man erhielt ein trübes Silikonöl. Zu 60 g von diesem Öl wurden 40 g 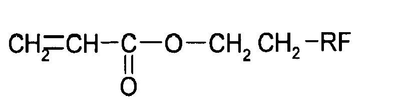 gegeben, wobei RF für CF₃(CF₂)ₘ- steht mit m = durchschnittlich 7, und das Ganze 4 Stunden bei 60°C gerührt. Es wurde eine dicke gelbliche Paste erhalten, die in Methyl-isobutylketon löslich war. Hierbei addiert sich die NH₂-Gruppe des dimeren/oligomeren Silans an die C=C-Doppelbindung des fluorierten Acrylats (Michael-Addition).

## Patentansprüche

1. Dimere und/oder oligomere Silane, herstellbar durch
Umsetzung eines Silans der Formel (I) 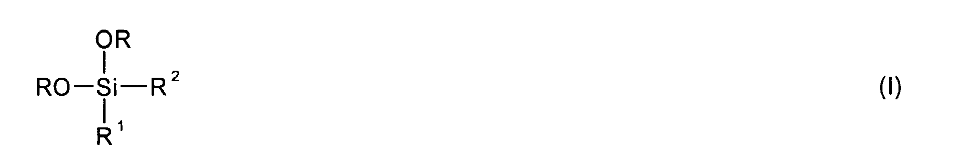 oder einem Gemisch solcher Silane mit Wasser, wobei pro Mol Silan oder Silangemisch 0,5 bis 1,5 Mol Wasser verwendet werden, zu einem dimeren und/oder oligomeren Produkt, welches 2 bis 200, insbesondere 2 bis 50, besonders bevorzugt 2 bis 15 Siliciumatome im Molekül enthält, oder zu einem Gemisch solcher dimerer oder oligomerer Produkte,
wobei
alle anwesenden Reste R unabhängig voneinander für den Phenylrest oder für einen Alkylrest mit 1 bis 18 Kohlenstoffatomen, vorzugsweise für CH₃ oder C₂H₅ stehen,
R¹ für R oder OR steht,
R² für den Vinylrest oder für einen linearen oder verzweigten Alkylrest mit 1 bis 18 Kohlenstoffatomen steht, der durch eine oder mehrere, gegebenenfalls quaternierte, Aminogruppen, Amidogruppen, Mercaptogruppen, Epoxygruppen, Phosphonogruppen, Hydroxygruppen oder Fluoratome substituiert sein kann, oder wobei
R² für einen Rest der Formel (II), der Formel (III) oder der Formel (IV) steht, 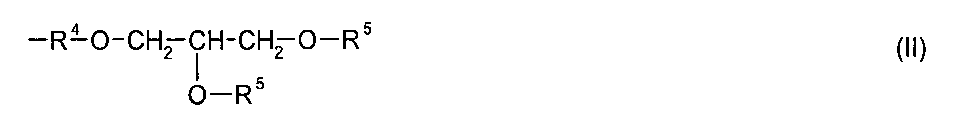 worin beide Reste R⁵ für 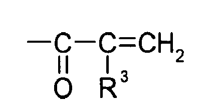 stehen, oder einer der Reste R⁵ für H und der andere für 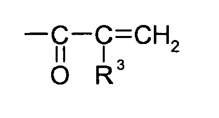 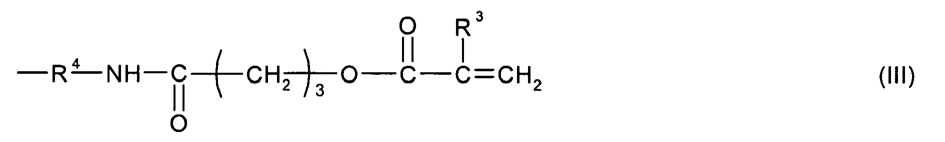 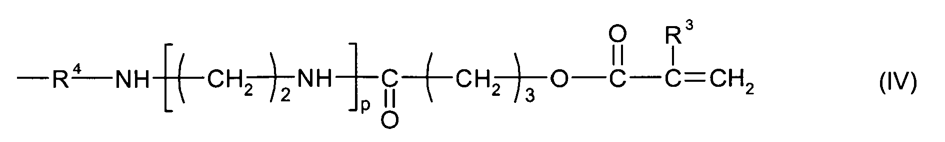 wobei p 0, 1 oder 2 ist,
wobei R³ jeweils für H oder CH₃ steht,
oder wobei R² für einen Rest der Formel (V) steht 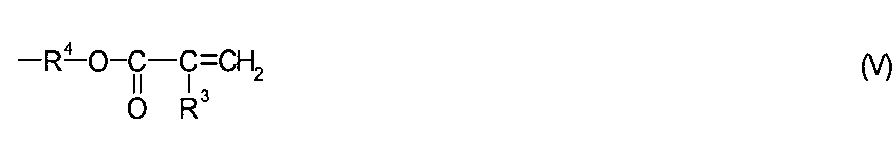 worin R⁴ für einen zweiwertigen linearen oder verzweigten Kohlenwasserstoffrest mit 1 bis 4 Kohlenstoffatomen steht,
oder wobei R² für einen Rest der Formel (VI) oder der Formel (VII) oder der Formel (X) steht 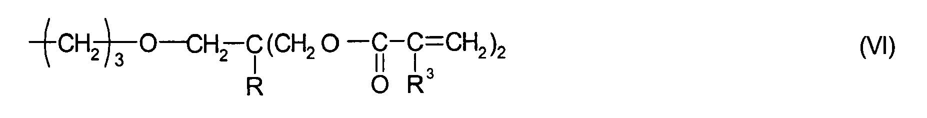 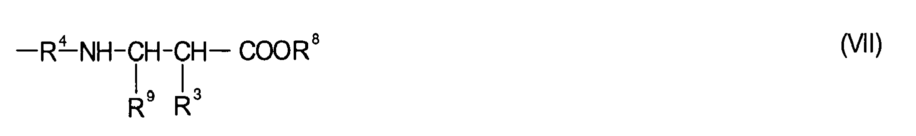 worin R⁸ für H oder für CH₃ oder für C₂H₅ oder für -CH₂CH₂-OH steht und R⁹ für H oder für -COOR⁸ steht

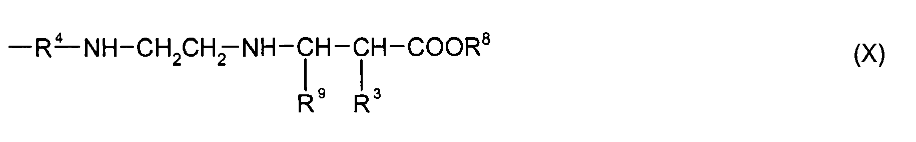

2. Silan nach Anspruch 1, **dadurch gekennzeichnet, dass** ein Silan der Formel (I) verwendet wird, bei dem alle anwesenden Reste R unabhängig voneinander für CH₃ oder -CH₂CH₃, vorzugsweise für CH₃, stehen und der Rest R² ein Rest der Formel (V) ist.

3. Polyorganosiloxane, herstellbar durch Umsetzung eines dimeren und/oder oligomeren Silans gemäß Anspruch 1 oder 2 mit einem Organosiloxan der Formel (VIII) oder mit Gemischen solcher Organosiloxane 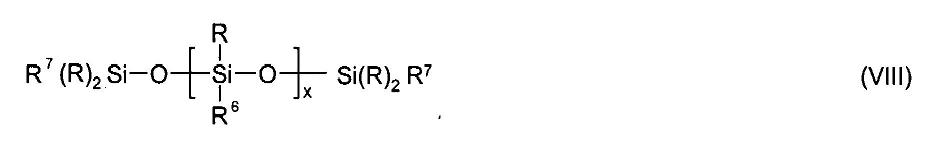 wobei R⁶ für R oder für einen Rest der Formel (IX) steht 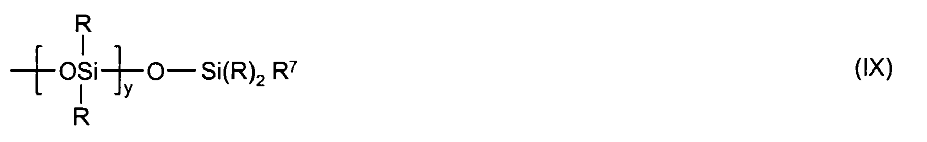 wobei x eine Zahl von 0 bis 1500 ist, vorzugsweise von 10 bis 1500,
y eine Zahl von 0 bis 500 ist,
wobei alle anwesenden Reste R⁷ für R oder OH stehen, wobei das Organosiloxan der Formel (VIII) vorzugsweise mindestens einen Rest R⁷ enthält, der für eine Hydroxygruppe steht.

4. Polyorganosiloxan nach Anspruch 3, **dadurch gekennzeichnet, dass** für die Umsetzung ein Organosiloxan der Formel (VIII) verwendet wird, bei dem zwei der anwesenden Reste R⁷ jeweils für eine OH-Gruppe stehen und dass die Umsetzung bei einer Temperatur im Bereich von 80 bis 120°C durchgeführt wird.

5. Polyorganosiloxan nach Anspruch 3 oder 4, **dadurch gekennzeichnet, dass** das Organosiloxan und das dimere oder oligomere Silan in solchen Mengenverhältnissen eingesetzt werden, dass pro Siliciumatom des Organosiloxans 0,001 bis 5 Siliciumatome des dimeren oder oligomeren Silans zum Einsatz kommen.

6. Verwendung der Polyorganosiloxane gemäß einem oder mehreren der Ansprüche 3 bis 5 zur Beschichtung von textilen Flächengebilden.
